# EUROPÄISCHE PATENTSCHRIFT

(11) **EP 2 789 510 B1**
(45) Veröffentlichungstag und Bekanntmachung des Hinweises auf die Patenterteilung: **10.05.2017**
(21) Anmeldenummer: 14000565.3
(22) Anmeldetag: 18.02.2014
(51) Int. Cl.: B60R 16/03, B60R 16/023, H02J 7/14

(54) **Energiemanagement für ein Kraftfahrzeug**
Energy management system for a motor vehicle
Gestion d'énergie pour un véhicule automobile

(30) Priorität: 11.04.2013 DE 102013006261
(43) Veröffentlichungstag der Anmeldung: 15.10.2014
(73) Patentinhaber: MAN Truck & Bus AG, 80995 München (DE)
(72) Erfinder: Kirchensteiner, Elmar, 85256 Vierkirchen (DE); Günnewicht, Manuel, 85652 Pliening (DE); Kerschl, Stefan, Dr., 85402 Kranzberg (DE); Franke, Olaf, 80807 München (DE); von Esebeck, Götz, Dr., 15831 Mahlow (DE)
(74) Vertreter: v. Bezold & Partner Patentanwälte - PartG mbB

(56) Entgegenhaltungen:
- EP-A1- 1 626 322
- DE-A1- 10 347 684
- DE-A1- 19 709 317
- DE-A1-102004 042 000
- DE-A1-102009 034 180

## Beschreibung

Die Erfindung betrifft ein Energiemanagementsystem für ein Kraftfahrzeug, vorzugsweise ein energiesubsystemübergreifendes Energiemanagementsystem mit einer Mischform aus zentraler Energieverwaltung und dezentralen Energieverwaltungen.

Kraftfahrzeuge müssen immer höhere Effizienzanforderungen erfüllen, insbesondere in Bezug auf einen minimalen Kraftstoffverbrauch und minimale Emissionen, zugleich aber einen hohen Fahrkomfort gewährleisten. Kraftfahrzeuge umfassen üblicherweise zumindest eine Hauptantriebseinheit und zudem eine Vielzahl von Energiesubsystemen (z.B. Nebenaggregatsysteme), wie z.B. das Druckluftsystem, das elektrische Bordnetz, etc.. Die Energiesubsysteme verfügen üblicherweise jeweils über ein eigenes Energiesubmanagement. Die einzelnen Energiesubsysteme werden unabhängig voneinander betrieben.

### Möglicherweise vorhandene

Energiepotentiale einzelner Energiesubsysteme werden nicht berücksichtigt und folglich nicht ausgeschöpft. Ein Nachteil davon ist, dass die Energiesubsysteme subsystemübergreifend betrachtet nicht immer optimal betrieben werden, was insbesondere mit einem erhöhten Gesamtenergieverbrauch des Kraftfahrzeugs einhergeht.

Die Offenlegungsschrift EP 1 626 322 A1 offenbart ein Verfahren zum Verwalten des Energiebedarfs elektrischer Verbraucher in einem elektrischen Netz. Hierbei wird ein Energiemanagement durchgeführt, bei dem eine Leistungs-Spezifikations-Nachricht und eine Prioritätsinformation von wenigstens einem elektrischen Verbraucher an eine zentrale Verwaltungseinrichtung übertragen wird, die die empfangenen Daten verarbeitet und in Abhängigkeit von der Auslastung des elektrischen Netzes, der Leistungs-Spezifikation und der Priorität der Verbraucher dem Verbrauch eine bestimmte Energiemenge zuordnet und so zentral Energieverteilung steuert.

Ähnliche Ansätze zur zentralen Koordination der Energieverteilung sind aus der DE 103 47 684 A1 und der DE 197 09 317 A1 bekannt.

Aus der DE 10 2009 034 180 A1 ist ferner ein Verfahren zur Ansteuerung eines elektrischen Energiespeichers eines Fahrzeugs bekannt, bei dem eine Zeitdauer für einen Energieüberschuss vorhergesagt wird und anhand der vorhergesagten Zeitdauer ein Energietransfer in oder aus dem Energiespeicher durchgeführt wird.

Eine Aufgabe der Erfindung ist es, ein verbessertes und/oder alternatives Energiemanagementsystem für ein Kraftfahrzeug, vorzugsweise ein Nutzfahrzeug, zu schaffen.

Diese Aufgabe kann mit den Merkmalen der unabhängigen Ansprüche gelöst werden. Vorteilhafte Weiterbildungen der Erfindung können den Unteransprüchen und der nachfolgenden Beschreibung entnommen werden.

Die Erfindung schafft ein Energiemanagementsystem für ein Kraftfahrzeug, insbesondere ein Energiesubsystem- und vorzugsweise Hauptantriebseinheit-übergreifendes Energiemanagementsystem mit einer Mischform aus zentraler Energieverwaltung und einzelnen dezentralen Energieverwaltungen. Das Energiemanagementsystem umfasst ein erstes zweckmäßig autarkes Energiesubsystem, das zur Erfüllung seiner Funktion Energie benötigt und ein eigenes Energiesubmanagement (z.B. eine Regel- und/oder Steuereinheit) sowie einen eigenen Energiespeicher aufweist. Das Energiemanagementsystem umfasst zumindest ein zweites zweckmäßig autarkes Energiesubsystem, das zur Erfüllung seiner Funktion Energie benötigt und ein eigenes Energiesubmanagement (z.B. eine Regel- und/oder Steuereinheit) sowie einen eigenen Energiespeicher aufweist. Das Energiemanagementsystem umfasst außerdem ein übergeordnetes Energiemanagement (z.B. eine Steuer- und/oder Regeleinheit), das zur übergeordneten Energieverwaltung des ersten Energiesubsystems und des zweiten Energiesubsystems dient.

Das erste Energiesubsystem ist so ausgeführt, dass es dem Energiemanagement zumindest eine managementrelevante Information übermittelt, während das zweite Energiesubsystem ebenso so ausgeführt ist, dass es dem Energiemanagement zumindest eine managementrelevante Information übermittelt.

Das Energiemanagement ist so ausgeführt, dass es in Abhängigkeit der übermittelten managementrelevanten Informationen eine Betriebsvorgabe für das erste Energiesubsystem ermittelt und an das erste Energiesubsystem kommuniziert und eine Betriebsvorgabe für das zweite Energiesubsystem ermittelt und an das zweite Energiesubsystem kommuniziert.

Das Energiemanagement ermittelt seine Betriebsvorgaben vorzugsweise unter Berücksichtigung vordefinierter Optimierungskriterien (z.B. Energieeffizienz, Emissionsminimierung und/oder Fahrkomfort) und/oder prioritätsbasiert insbesondere so, dass sich in Bezug auf die durch das Energiemanagement verwalteten Kraftfahrzeug-Komponenten eine Gesamtoptimierung einstellt. Die durch das Energiemanagement verwalteten Kraftfahrzeug-Komponenten umfassen insbesondere die Energiesubsysteme und vorzugsweise zumindest eine Hauptantriebseinheit des Kraftfahrzeugs.

Dadurch, dass das Energiemanagement unter Berücksichtigung mehrerer Energiesubsysteme und vorzugsweise vordefinierter Optimierungskriterien (z.B. Energieeffizienz, Emissionsminimierung und/oder Fahrkomfort) seine Betriebsvorgaben ermittelt, kann eine Energie-Verwaltungs-Gesamtoptimierung über sämtliche der durch das Energiemanagementsystem verwalteten Kraftfahrzeug-Komponenten erzielt werden. So kann z.B. der Gesamtenergieverbrauch des Kraftfahrzeugs reduziert werden, die Gesamtenergieeffizienz des Kraftfahrzeugs gesteigert werden, die Gesamtemissionen des Kraftfahrzeugs reduziert werden und/oder der Fahrkomfort des Kraftfahrzeugs gesteigert werden.

Die erzielbare Optimierung erfolgt einerseits dezentral mittels den einzelnen Energiesubmanagements und andererseits zentral mittels des übergeordneten Energiemanagements. Das Energiemanagementsystem teilt seine Optimierungsaufgaben somit zweckmäßig in zwei Ebenen. In der ersten Ebene befindet sich das übergeordnete Energiemanagement, während sich in der zweiten Ebene die einzelnen Energiesubmanagements der untergeordneten Energiesubsysteme befinden.

Die managementrelevante Information des ersten Energiesubsystems spezifiziert einen Energie-Spielraum, innerhalb dem das erste Energiesubsystem funktionsgerecht betrieben werden kann. Die managementrelevante Information des zweiten Energiesubsystems spezifiziert einen Energie-Spielraum, innerhalb dem das zweite Energiesubsystem funktionsgerecht betrieben werden kann. Die Betriebsvorgabe an das erste Energiesubsystem umfasst eine sich im übermittelten Energie-Spielraum für das erste Energiesubsystem bewegende Leistungsvorgabe. Die Betriebsvorgabe an das zweite Energiesubsystem umfasst eine sich im übermittelten Energie-Spielraum für das zweite Energiesubsystem bewegende Leistungsvorgabe. Die managementrelevanten Informationen können somit Energieressourcen und Energieanforderungen der einzelnen Energiesubsystemen beschreiben. Dadurch kann das Energiemanagement subsystemübergreifend Energie-Verteilungs-Spielräume/Freiheitsgrade und/oder Energieressourcen erkennen, die in die Ermittlung der Betriebsvorgaben einfließen, vorzugsweise unter Berücksichtigung der schon zuvor erwähnten Optimierungskriterien. Das Energiemanagement kann somit zweckmäßig Energieressourcen bedarfsabhängig zwischen den Energiesubsystemen verteilen.

So ist es z.B. möglich, dass ein Energiesubsystem aktuell weniger relevant ist, so dass es in Bezug auf seinen Energie-Spielraum mit minimaler Energie versorgt werden kann und folglich eine Energieressource zur Verfügung stellen kann, während ein aktuell stark gefordertes Energiesubsystem in Bezug auf seinen Energie-Spielraum mit maximaler Energie versorgt werden kann und bedarfsabhängig die Energieressource in Anspruch nehmen kann.

Die managementrelevante Information des ersten Energiesubsystems umfasst zweckmäßig eine aktuell maximal zulässige Leistungsaufnahme des ersten Energiesubsystems, zweckmäßig zum oberen Begrenzen des zugehörigen Energie-Spielraums. Die Leistungsaufnahme beschreibt vorzugsweise eine gemittelte Maximalleistung für einen vordefinierten Zeitraum. Die managementrelevante Information des zweiten Energiesubsystems umfasst vorzugsweise eine aktuell maximal zulässige Leistungsaufnahme des zweiten Energiesubsystems, zweckmäßig zum oberen Begrenzen des zugehörigen Energie-Spielraums. Die Leistungsaufnahme beschreibt vorzugsweise eine gemittelte Maximalleistung für einen vordefinierten Zeitraum.

Die managementrelevante Information des ersten Energiesubsystems umfasst ferner insbesondere eine aktuell minimal zulässige Leistungsaufnahme des ersten Energiesubsystems, zweckmäßig zum unteren Begrenzen des zugehörigen Energie-Spielraums. Die Leistungsaufnahme beschreibt vorzugsweise eine gemittelte Minimalleistung für einen vordefinierten Zeitraum. Die managementrelevante Information des zweiten Energiesubsystems umfasst insbesondere eine aktuell minimal zulässige Leistungsaufnahme des zweiten Energiesubsystems, zweckmäßig zum unteren Begrenzen des zugehörigen Energie-Spielraums. Die Leistungsaufnahme beschreibt vorzugsweise eine gemittelte Minimalleistung für einen vordefinierten Zeitraum.

Die zuvor genannten vordefinierten Zeiträume gelten z.B. für die nächsten 20, 25, 30 oder 35 Sekunden.

Darüber hinaus kann die managementrelevante Information des ersten Energiesubsystems einen aktuellen Leistungsbedarf des ersten Energiesubsystems umfassen, während die managementrelevante Information des zweiten Energiesubsystems einen aktuellen Leistungsbedarf des zweiten Energiesubsystems umfassen kann.

Das erste Energiesubmanagement kann einen eigenen Energiespeicher aufweisen und das zweite Energiesubsystem kann einen eigenen Energiespeicher aufweisen.

Die managementrelevante Information des ersten Energiesubsystems umfasst vorzugsweise eine aktuelle Gesamtenergiemenge zwischen einem minimal zulässigen und einem maximal zulässigen Energiezustand des Energiespeichers des ersten Energiesubsystems. Die managementrelevante Information des zweiten Energiesubsystems umfasst zweckmäßig eine aktuelle Gesamtenergiemenge zwischen einem minimal zulässigen und einem maximal zulässigen Energiezustand des Energiespeichers des zweiten Energiesubsystems.

Die managementrelevante Information des ersten Energiesubsystems kann ferner einen aktuellen Energiezustand des Energiespeichers des ersten Energiesubsystems umfassen, während die managementrelevante Information des zweiten Energiesubsystems einen aktuellen Energiezustand des Energiespeichers des zweiten Energiesubsystems umfassen kann.

Das erste Energiesubsystem weist ein bestimmtes Wirkungsgradverhalten bzw. einen bestimmten Wirkungsgrad auf. Ebenso weist das zweite Energiesubsystem ein bestimmtes Wirkungsgradverhalten bzw. einen bestimmten Wirkungsgrad auf.

Das Energiemanagement ist vorzugsweise so ausgeführt, dass es die Wirkungsgradverhalten und/oder die Wirkungsgrade kennt und seine Betriebsvorgaben in Abhängigkeit des Wirkungsgradverhaltens und/oder des Wirkungsgrads des ersten Energiesubsystems und des zweiten Energiesubsystems und vorzugsweise zumindest einer Hauptantriebseinheit des Kraftfahrzeugs ermittelt.

Es ist möglich, dass das Energiemanagement seine Betriebsvorgaben in Abhängigkeit aktueller Betriebsdaten des Kraftfahrzeugs ermittelt. Alternativ oder ergänzend ist es möglich, dass das Energiemanagement seine Betriebsvorgaben in Abhängigkeit prognostizierter, zukünftig zu erwartender Betriebsdaten des Kraftfahrzeugs ermittelt. Das Energiemanagement kann seine Betriebsvorgaben ferner in Abhängigkeit von Betriebsdaten zumindest einer Hauptantriebseinheit des Kraftfahrzeugs ermitteln.

Die Betriebsdaten des Kraftfahrzeugs umfassen insbesondere die Fahrsituation des Kraftfahrzeugs, z.B. die Außentemperatur, ein Fahrstrecken-Höhenprofil (z.B. Fahrt auf Gefällestrecke, Fahrt auf Steigungsstrecke oder Fahrt auf ebener Strecke), die Fahrgeschwindigkeit des Kraftfahrzeugs, eine Stausituation, eine Fahrt auf einer Überlandstraße oder einer Autobahn, eine Fahrt innerorts oder innerstädtisch, etc..

Die Betriebsdaten der Hauptantriebseinheit des Kraftfahrzeugs umfassen z.B. das Drehmoment der Hauptantriebseinheit, den Kraftstoffverbrauch der Hauptantriebseinheit, etc..

Die prognostizierten Betriebsdaten stammen vorzugsweise aus einer Routenplanung eines Navigationsgeräts des Kraftfahrzeugs.

Das Energiemanagement ist, wie schon zuvor ausgeführt, vorzugsweise so ausgeführt, dass es seine Betriebsvorgaben zweckmäßig unter Berücksichtigung vordefinierter Optimierungskriterien so ermittelt, dass für die durch das Energiemanagement verwalteten Kraftfahrzeug-Komponenten, insbesondere die Energiesubsysteme und optional eine Hauptantriebseinheit des Kraftfahrzeugs, eine subsystemübergreifende und/oder ganzheitliche Zieloptimierung (z.B. in Bezug auf einen minimierten Gesamtenergieverbrauch, minimierte Gesamtemissionen und/oder erhöhten Gesamtfahrkomfort) erreicht werden kann.

Das Kraftfahrzeug kann z.B. zumindest eine Hauptantriebseinheit umfassen, insbesondere einen Verbrennungsmotor und/oder eine Elektromaschine zum Antreiben des Kraftfahrzeugs, deren Betriebsdaten ebenso in die Ermittlung der Betriebsvorgaben für die Energiesubsysteme einfließen können. Das Energiemanagementsystem eignet sich somit insbesondere für Hybrid-Kraftfahrzeuge, vorzugsweise mit einem Verbrennungsmotor und zweckmäßig einer Elektromaschine zum Antreiben des Kraftfahrzeugs.

Die Energiesubsysteme sind vorzugsweise so ausgeführt, dass sie primär ihre Funktionen adäquat erfüllen, selbst wenn sie keine Betriebsvorgaben erhalten oder Betriebsvorgaben, die einer adäquaten Funktion widersprechen.

Zu erwähnen ist, dass die Erfindung nicht auf zwei Energiesubsysteme beschränkt ist, sondern auch mehr als zwei, drei, vier, fünf oder sogar mehr als sechs Energiesubsysteme umfassen kann.

Die Erfindung ist nicht auf ein Energiemanagementsystem beschränkt, sondern umfasst zusätzlich ein Kraftfahrzeug, vorzugsweise ein Nutzfahrzeug wie etwa einen Lastkraftwagen oder einen Omnibus, mit einem Energiemanagementsystem wie hierin beschrieben.

Die Erfindung umfasst außerdem ein Betriebsverfahren für ein vorzugsweise wie hierin beschriebenes Energiemanagementsystem. Das Betriebsverfahren umfasst zweckmäßig die folgenden Verfahrensschritte: Das erste Energiesubsystem übermittelt dem Energiemanagement zumindest eine managementrelevante Information, das zweite Energiesubsystem übermittelt dem Energiemanagement zumindest eine managementrelevante Information, das Energiemanagement ermittelt in Abhängigkeit der managementrelevanten Informationen eine Betriebsvorgabe für das erste Energiesubsystem und kommuniziert sie an das erste Energiesubsystem und ermittelt eine Betriebsvorgabe für das zweite Energiesubsystem und kommuniziert sie an das zweite Energiesubsystem. Weitere erfindungsgemäße Verfahrensschritte des Betriebsverfahrens ergeben sich aus der Beschreibung des zugehörigen Energiemanagementsystems wie hierin beschrieben.

Die oben beschriebenen Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine schematische Darstellung eines Energiemanagementsystems für ein Kraftfahrzeug gemäß einer Ausführungsform der Erfindung und
- Figur 2: zeigt eine detailliertere schematische Darstellung eines Energiemanagementsystems für ein Kraftfahrzeug gemäß einer Ausführungsform der Erfindung.

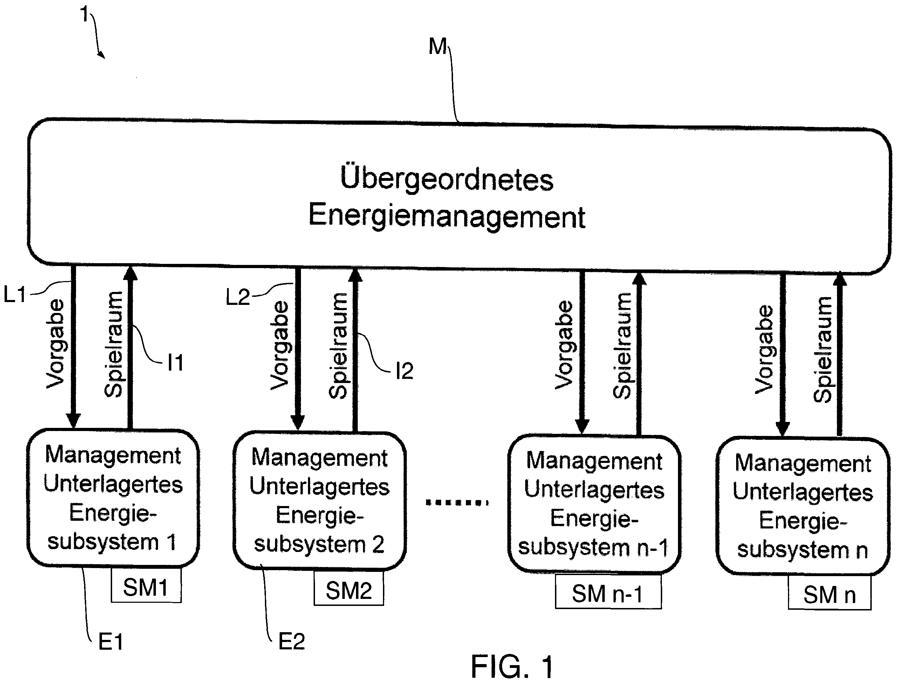

Figur 1 zeigt eine schematische Darstellung eines Energiemanagementsystems 1 für ein Kraftfahrzeug, vorzugsweise ein Nutzfahrzeug. Das Energiemanagementsystem 1 umfasst ein übergeordnetes Energiemanagement M (z.B. eine Steuer- und/oder Regeleinheit) und eine Vielzahl von Energiesubsystemen (z.B. Kraftfahrzeug-Nebenaggregate, insbesondere Druckluftsystem, elektrisches Bordnetz, Klimaanlage, Hilfskraftlenkung, etc.) mit einzelnen, dem Energiemanagement M untergeordneten Energiesubmanagements (z.B. Steuer- und/oder Regeleinheiten). Die Energiesubsysteme verfügen ferner über eigene Energiespeichereinrichtungen. Nachfolgend wird das Energiemanagementsystem 1 unter Bezugnahme auf ein erstes, ein eigenes Energiesubmanagement SM1 aufweisendes Energiesubsystem E1 und ein zweites, ein eigenes Energiesubmanagement SM2 aufweisendes Energiesubsystem E2 beschrieben. Wie aus Figur 1 ersichtlich ist, umfasst die Erfindung allerdings ebenso Ausführungsformen mit mehr als zwei Energiesubsystemen.

Das erste Energiesubsystem E1 stellt ein zweckmäßig autarkes Energiesubsystem dar, das zur Erfüllung seiner Funktion Energie benötigt und ein eigenes Energiesubmanagement SM1 und einen eigenen Energiespeicher aufweist. Das zweite Energiesubsystem E2 stellt ebenso ein autarkes Energiesubsystem dar, das zur Erfüllung seiner Funktion Energie benötigt und ebenso über ein eigenes Energiesubmanagement SM2 und einen eigenen Energiespeicher verfügt.

Die Energiemanagement M einerseits und die Energiesubsysteme E1 und E2 andererseits stehen miteinander in Wirkverbindung. Das erste Energiesubsystem E1 ist so ausgeführt, dass es dem Energiemanagement M managementrelevante Informationen I1 übermittelt, und das zweite Energiesubsystem E2 ist so ausgeführt, dass es dem Energiemanagement M managementrelevante Informationen I2 übermittelt.

Das Energiemanagement M ist so ausgeführt, dass es in Abhängigkeit der übermittelten managementrelevanten Informationen I1 und I2 und z.B. vordefinierter Optimierungskriterien bzw. prioritätsbasiert eine Betriebsvorgabe (Soll-Vorgabe) L1 für das erste Energiesubsystem E1 ermittelt und an das erste Energiesubsystem E1 kommuniziert und eine Betriebsvorgabe (Soll-Vorgabe) L2 für das zweite Energiesubsystem E2 ermittelt und an das zweite Energiesubsystem E2 kommuniziert.

Das Energiemanagementsystem 1 umfasst somit eine übergeordnete Ebene, die durch das Energiemanagement M repräsentiert wird und eine zentrale Energieverwaltung darstellt, und eine untergeordnete Ebene, die durch die Energiesubsysteme E1 und E2, insbesondere deren Energiesubmanagements SM1 und SM2 repräsentiert wird und dezentrale Energieverwaltungen darstellt. Die durch das Energiemanagementsystem 1 angestrebte Kraftfahrzeug-Betriebsoptimierung erfolgt somit weder nur dezentral mittels den einzelnen Energiesubsystemen E1 und E2, noch ausschließlich zentral mittels des Energiemanagements M.

Das Energiemanagement M ermöglicht unter Berücksichtigung der einzelnen Energiesubsysteme E1 und E2 eine subsystemübergreifende, ganzheitliche Energie-Verwaltungs-Optimierung, z.B. eine Reduzierung des Gesamtenergieverbrauchs, eine Steigerung der Gesamtenergieeffizienz, eine Minimierung der Gesamtemissionen und/oder eine Steigerung des Gesamtfahrkomforts.

So ist es z.B. möglich, dass obwohl das Energiesubsystem E1 und das Energiesubsystem E2 einzeln, für sich betrachtet und somit quasi lokal nicht optimal betrieben werden, subsystemübergreifend und somit quasi global ein in Abhängigkeit vordefinierter Optimierungskriterien optimierter Gesamtbetrieb erreicht werden kann. Folglich sind z.B. Konstellationen möglich, bei denen einzelne Energiesubsysteme für sich betrachtet nicht optimal betrieben werden, das Kraftfahrzeug ganzheitlich betrachtet aber unter Zugrundelegung vordefinierter Optimierungskriterien optimal betrieben wird.

Eine nur dezentrale Optimierung der einzelnen Energiesubsysteme E1 und E2 führt dazu, dass die einzelnen Energiesubsysteme E1 und E2 für sich betrachtet optimiert betrieben werden können. Möglicherweise vorhandene Energiepotenziale der Energiesubsysteme E1 und 2 werden allerdings nicht genutzt. Eine nur zentrale Optimierung kann wegen der Komplexität durch Berücksichtigung verschiedenster Einflüsse im Energiesubsystemverhalten, unterschiedlichsten Ausbau- und Konfigurationsgraden sinnvoll kaum oder gar nicht dargestellt werden. Das Energiemanagementsystem 1 stellt einen Kompromiss zwischen zentraler Optimierung und dezentralen Optimierungen dar, der durch Trennung der Aufgaben des übergeordneten Energiemanagements M und der unterlagerten Energiesubmanagements SM1 und SM2 einfach realisierbar ist. Trotz des Kompromisses ist eine zumindest nahezu vollständige Nutzung der Energiepotenziale der Energiesubsysteme E1 und E2 und somit quasi eine Gesamtoptimierung über sämtlich durch das Energiemanagement M verwalteten Kraftfahrzeug-Komponenten möglich.

Die Energiesubsysteme E1 und E2 arbeiten im Regelfall basierend auf den Betriebsvorgaben L1 und L2 möglichst energieverbrauchsminimiert, emissionsminimiert und/oder fahrkomfortmaximiert. Sie sind allerdings so ausgeführt, dass sie primär ihre Funktionen adäquat zu erfüllen haben. Daraus folgert, dass selbst wenn die Energiesubsysteme E1 und E2 z.B. vorübergehend keine Betriebsvorgaben L1 und L2 erhalten oder aber Betriebsvorgaben L1 und L2 erhalten, die einem funktionsgerechten Betrieb widersprechen, sie dennoch ihr Funktionen sachgemäß ausführen.

Eine Besonderheit des Energiemanagementsystems 1 ist, dass die managementrelevanten Informationen I1 des ersten Energiesubsystems E1 einen Energie-Spielraum spezifizieren, mittels dem das erste Energiesubsystem E1 funktionsgerecht betrieben werden kann, und die managementrelevanten Informationen I2 des zweiten Energiesubsystems E2 einen Energie-Spielraum spezifizieren, mittels dem das zweite Energiesubsystem E2 funktionsgerecht betrieben werden kann.

Die Betriebsvorgabe L1 umfasst eine sich im übermittelten Energie-Spielraum für das erste Energiesubsystem E1 bewegende Leistungsabgabe, während die Betriebsvorgabe L2 eine sich im übermittelten Energie-Spielraum für das zweite Energiesubsystem E2 bewegende Leistungsvorgabe umfasst.

Dadurch, dass dem Energiemanagement M Energie-Spielräume übermittelt werden, innerhalb derer die Energiesubsysteme E1 und E2 funktionsgerecht betrieben werden können, entsehen für das Energiemanagement M Energie-Verteilungs-Spielräume, die in Abhängigkeit vordefinierter Optimierungskriterien in die Ermittlung der Betriebsvorgaben L1 und L2 einfließen. Das Energiemanagement M kann somit möglicherweise vorhandene Energieressourcen der Energiesubsysteme E1 und E2 erkennen und sie mittels der Betriebsvorgaben L1 und L2 bedarfsabhängig zwischen den Energiesubsystemen E1 und E2 verteilen bzw. verlagern.

Das Energiemanagement M kann mit relativ einfachen funktionalen Zusammenhängen in Abhängigkeit der übermittelten Energie-Spielräume, die somit quasi Freiheitsgrade für das Energiemanagement M darstellen, eine ganzheitliche insbesondere energetische Optimierung unter Einbeziehung sämtlicher der durch das Energiemanagement M verwalteten Kraftfahrzeug-Komponenten (z.B. die Energiesubsysteme E1 und E2 und zumindest eine Hauptantriebseinheit des Kraftfahrzeugs) erzielen. Somit kann bezogen auf das Kraftfahrzeug insgesamt eine Gesamtoptimierung erzielt werden, obwohl einzelne Energiesubsysteme möglicherweise nicht optimal, aber funktionsgerecht betrieben werden.

Optimierungskriterien sind z.B. Energieeffizienz, Emissionsminimierung und/oder Fahrkomfort, aber auch insbesondere ein Mix aus zuvor genannten Optimierungskriterien, z.B. Priorität Energieeffizienz 70%, Priorität Emissionsminimierung 10%, Priorität Fahrkomfort 20%.

Die Schnittstelle zwischen dem Energiemanagement M einerseits und den Energiesubsystemen E1 und E2 andererseits umfasst Signale zur Kommunikation zwischen dem Energiemanagement M und den Energiesubsystemen E1 und E2. Die Schnittstelle zwischen den Energiesubsystemen E1 und E2 einerseits und dem Energiemanagement M andererseits ist zweckmäßig generisch, so dass sie für unterschiedlichste Energiesubsysteme E1 und E2 einheitlich verwendet werden kann.

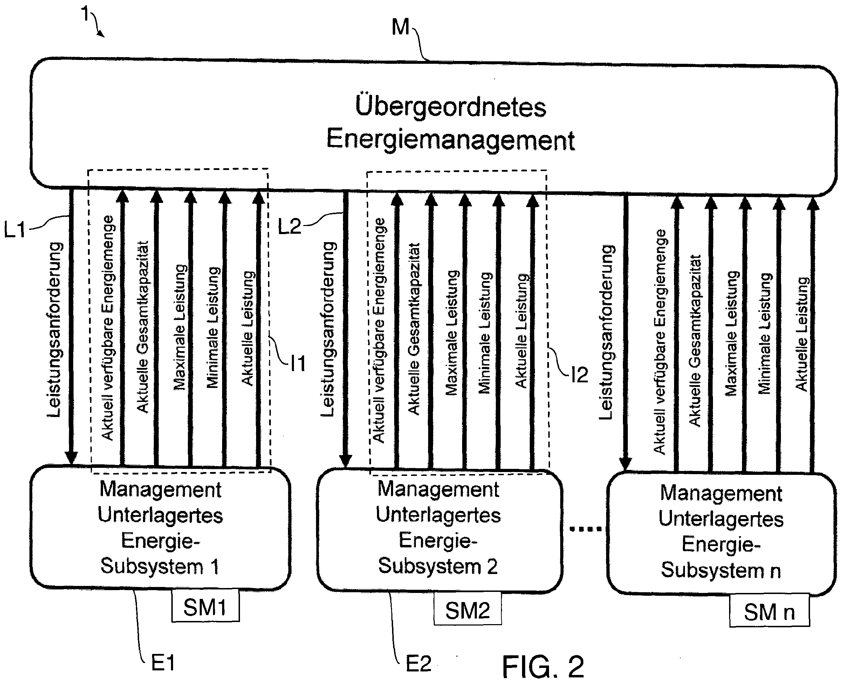

Figur 2 zeigt eine detailliertere schematische Darstellung des Energiemanagementsystems 1 aus Figur 1.

Figur 2 zeigt, dass die managementrelevanten Informationen I1 des ersten Energiesubsystems E1 und die managementrelevanten Informationen I2 des zweiten Energiesubsystems E2 im Speziellen Folgendes beschreiben können:
- aktuell maximal zulässige Leistungsaufnahmen zum Begrenzen der zugehörigen Energie-Spielräume,
- aktuell minimal zulässige Leistungsaufnahmen zum Begrenzen der zugehörigen Energie-Spielräume,
- aktuelle Leistungsbedarfe der Energiesubsysteme,
- aktuelle Gesamtenergiemengen zwischen maximal zulässigen und minimal zulässigen Energiezuständen der Energiespeicher,
- aktuelle Energiezustände der Energiespeicher.

Das Energiemanagement M arbeitet quasi in Echtzeit und verfügt stets über aktuelle Betriebsdaten der Energiesubsysteme E1 und E2, welche in die Ermittlung der Betriebsvorgaben L1 und L2 einfließen. Das Energiemanagement M berücksichtigt allerdings nicht nur Betriebsdaten der Energiesubsysteme E1 und E2, sondern auch darüber hinaus gehende Betriebsdaten des Kraftfahrzeugs, z.B. eine aktuelle Fahrsituation des Kraftfahrzeugs, wie etwa Außentemperatur, Fahrgeschwindigkeit, Fahrt auf Überlandstrecke oder Autobahn, Fahrt innerorts oder innerstädtisch (Stop-and-Go-Betrieb), Fahrstrecken-Höhenprofil, etc., welche ebenso in die Ermittlung der Betriebsvorgaben L1 und L2 einfließen. Das Energiemanagement M kann zudem Betriebsdaten der Hauptantriebseinheit des Kraftfahrzeugs berücksichtigen, z.B. deren aktuelles Drehmoment.

Das Energiemanagement M kann aber nicht nur aktuelle Betriebsdaten berücksichtigen, sondern ebenso prognostizierte, voraussichtlich auftretende Betriebsdaten. Die prognostizierten Betriebsdaten stammen aus einer Routenplanung eines Navigationsgeräts des Kraftfahrzeugs und können ebenfalls in die Ermittlung der Betriebsvorgaben L1 und L2 einfließen.

Eine weitere Besonderheit des Energiemanagementsystems 1 ist, dass es die Wirkungsgrade und/oder die Wirkungsgradverhalten der Energiesubsysteme E1 und E2 kennt und ebenso in Abhängigkeit hiervon seine Betriebsvorgaben L1 und L2 ermittelt.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmale und Ansprüchen.

## Patentansprüche

1. Energiemanagementsystem (1) für ein Kraftfahrzeug, vorzugsweise energiesubsystemübergreifendes Energiemanagementsystem (1) mit einer Mischform aus zentraler Energieverwaltung und dezentralen Energieverwaltungen, mit:
- einem ersten autarken Energiesubsystem (E1), das zur Erfüllung seiner Funktion Energie benötigt und ein eigenes Energiesubmanagement (SM1) und einen eigenen Energiespeicher aufweist,
- zumindest einem zweiten autarken Energiesubsystem (E2), das zur Erfüllung seiner Funktion Energie benötigt und ein eigenes Energiesubmanagement (SM2) und einen eigenen Energiespeicher aufweist,
- einem Energiemanagement (M), das zur übergeordneten Energieverwaltung des ersten Energiesubsystems (E1) und des zweiten Energiesubsystems (E2) dient,
- wobei das erste Energiesubsystem (E1) ausgebildet ist, dem Energiemanagement (M) zumindest eine managementrelevante Information (I1) zu übermitteln und das zweite Energiesubsystem (E2) ausgebildet ist, dem Energiemanagement (M) zumindest eine managementrelevante Information (I2) zu übermitteln und das Energiemanagement (M) ausgebildet ist, in Abhängigkeit der managementrelevanten Informationen (I1, I2) eine Betriebsvorgabe (L1) für das erste Energiesubsystem (E1) zu ermitteln und an das erste Energiesubsystem (E1) zu kommunizieren und eine Betriebsvorgabe (L2) für das zweite Energiesubsystem (E2) zu ermitteln und an das zweite Energiesubsystem (E2) zu kommunizieren,
wobei die managementrelevante Information (I1) des ersten Energiesubsystems (E1) einen Energie-Spielraum spezifiziert, mittels dem das erste Energiesubsystem (E1) funktionsgerecht betrieben werden kann, und die managementrelevante Information (12) des zweiten Energiesubsystems (E2) einen Energie-Spielraum spezifiziert, mittels dem das zweite Energiesubsystem (E2) funktionsgerecht betrieben werden kann und die Betriebsvorgabe (L1) an das erste Energiesubsystem (E1) eine sich im übermittelten Energie-Spielraum für das erste Energiesubsystem (E1) bewegende Leistungsvorgabe umfasst und die Betriebsvorgabe (L2) an das zweite Energiesubsystem (E2) eine sich im übermittelten Energie-Spielraum für das zweite Energiesubsystem (E2) bewegende Leistungsvorgabe umfasst.

2. Energiemanagementsystem (1) nach Anspruch 1, wobei die managementrelevante Information (I1) des ersten Energiesubsystems (E1) eine aktuell maximal zulässige Leistungsaufnahme des ersten Energiesubsystems (E1) umfasst, vorzugsweise zum Begrenzen des zugehörigen Energie-Spielraums, und die managementrelevante Information (I2) des zweiten Energiesubsystems (E2) eine aktuell maximal zulässige Leistungsaufnahme des zweiten Energiesubsystems (E2) umfasst, vorzugsweise zum Begrenzen des zugehörigen Energie-Spielraums.

3. Energiemanagementsystem (1) nach einem der vorhergehenden Ansprüche, wobei die managementrelevante Information (I1) des ersten Energiesubsystems (E1) eine aktuell minimal zulässige Leistungsaufnahme des ersten Energiesubsystems (E1) umfasst, vorzugsweise zum Begrenzen des zugehörigen Energie-Spielraums, und die managementrelevante Information (I2) des zweiten Energiesubsystems (E2) eine aktuell minimal zulässige Leistungsaufnahme des zweiten Energiesubsystems (E2) umfasst, vorzugsweise zum Begrenzen des zugehörigen Energie-Spielraums.

4. Energiemanagementsystem (1) nach einem der vorhergehenden Ansprüche, wobei die managementrelevante Information (I1) des ersten Energiesubsystems (E1) einen aktuellen Leistungsbedarf des ersten Energiesubsystems (E1) umfasst und die managementrelevante Information (I2) des zweiten Energiesubsystems (E2) einen aktuellen Leistungsbedarf des zweiten Energiesubsystems (E2) umfasst.

5. Energiemanagementsystem (1) nach einem der vorhergehenden Ansprüche, wobei die managementrelevante Information (I1) des ersten Energiesubsystems (E1) eine aktuelle Gesamtenergiemenge zwischen einem minimal zulässigen und einem maximal zulässigen Energiezustand des Energiespeichers des ersten Energiesubsystems (E1) umfasst, und die managementrelevante Information (I2) des zweiten Energiesubsystems (E2) eine aktuelle Gesamtenergiemenge zwischen einem minimal zulässigen und einem maximal zulässigen Energiezustand des Energiespeichers des zweiten Energiesubsystems (E2) umfasst.

6. Energiemanagementsystem (1) nach einem der vorhergehenden Ansprüche, wobei die managementrelevante Information (I1) des ersten Energiesubsystems (E1) einen aktuellen Energiezustand des Energiespeichers des ersten Energiesubsystems (E1) umfasst, und die managementrelevante Information (I2) des zweiten Energiesubsystems (E2) einen aktuellen Energiezustand des Energiespeichers des zweiten Energiesubsystems (E2) umfasst.

7. Energiemanagementsystem (1) nach einem der vorhergehenden Ansprüche, wobei das Energiemanagement (M) ausgebildet ist, seine Leistungsvorgaben (L1, L2) in Abhängigkeit eines Wirkungsgradverhaltens und/oder Wirkungsgrads des ersten Energiesubsystems (E1) und eines Wirkungsgradverhaltens und/oder Wirkungsgrads des zweiten Energiesubsystems (E2) zu ermitteln.

8. Energiemanagementsystem (1) nach einem der vorhergehenden Ansprüche, wobei das Energiemanagement (M) ausgebildet ist, seine Betriebsvorgaben (L1, L2) in Abhängigkeit von aktuellen Betriebsdaten des Kraftfahrzeugs zu ermitteln.

9. Energiemanagementsystem (1) nach einem der vorhergehenden Ansprüche, wobei das Energiemanagement (M) ausgebildet ist, seine Betriebsvorgaben (L1, L2) in Abhängigkeit von prognostizierten Betriebsdaten des Kraftfahrzeugs zu ermitteln.

10. Energiemanagementsystem (1) nach einem der vorhergehenden Ansprüche, wobei das Energiemanagement (M) ausgebildet ist, seine Betriebsvorgaben (L1, L2) in Abhängigkeit von Betriebsdaten zumindest einer Hauptantriebseinheit des Kraftfahrzeugs zu ermitteln.

11. Energiemanagementsystem (1) nach einem der Ansprüche 8 bis 10, wobei die Betriebsdaten die Fahrsituation des Kraftfahrzeugs beschreiben, vorzugsweise eine Außentemperatur, ein Fahrstrecken-Höhenprofil und/oder eine Fahrgeschwindigkeit des Kraftfahrzeugs.

12. Energiemanagementsystem (1) nach einem der vorhergehenden Ansprüche, wobei das Energiemanagement (M) ausgebildet ist, unter Berücksichtigung der durch das Energiemanagement (M) verwalteten Energiesubsysteme (E1, E2) und vordefinierter Optimierungskriterien, umfassend eine Energieeffizienz, eine Emissionsminimierung und/oder einen Fahrkomfort, seine Betriebsvorgaben derart zu ermitteln, dass für die durch das Energiemanagement (M) verwalteten Energiesubsysteme (E1, E2) eine subsystemübergreifende Gesamtoptimierung in Bezug auf einen minimierten Gesamtenergieverbrauch, eine minimierte Gesamtemissionen und/oder einen erhöhten Gesamtfahrkomfort erreicht wird.

13. Energiemanagementsystem (1) nach einem der vorhergehenden Ansprüche, wobei die Energiesubsysteme (E1, E2) ausgebildet sind, im Regelfall basierend auf den Betriebsvorgaben L1 und L2 möglichst energieverbrauchsminimiert, emissionsminimiert und/oder fahrkomfortmaximiert zu arbeiten, und wobei die Energiesubsysteme (E1, E2) ferner ausgebildet sind, primär ihre Funktionen funktionsgerecht zu erfüllen, so dass selbst wenn sie keine oder dem widersprechende Betriebsvorgaben (L1, L2), die einem funktionsgerechten Betrieb widersprechen, erhalten, sie dennoch ihre Funktionen sachgemäß ausführen.

14. Kraftfahrzeug, vorzugsweise Nutzfahrzeug, mit einem Energiemanagementsystem (1) nach einem der vorhergehenden Ansprüche.

15. Betriebsverfahren für ein Kraftfahrzeug-Energiemanagementsystem (1) mit einem ersten autarken Energiesubsystem (E1), das zur Erfüllung seiner Funktion Energie benötigt und ein eigenes Energiesubmanagement (SM1) und einen eigenen Energiespeicher aufweist, zumindest einem zweiten autarken Energiesubsystem (E2), das zur Erfüllung seiner Funktion Energie benötigt und ein eigenes Energiesubmanagement (SM2) und einen eigenen Energiespeicher aufweist, und einem Energiemanagement (M), das zur übergeordneten Energieverwaltung des ersten Energiesubsystems (E1) und des zweiten Energiesubsystems (E2) dient, mit den folgenden Schritten:
- das erste Energiesubsystem (E1) übermittelt dem Energiemanagement (M) zumindest eine managementrelevante Information (I1),
- das zweite Energiesubsystem (E2) übermittelt dem Energiemanagement (M) zumindest eine managementrelevante Information (I2),
- das Energiemanagement (M) ermittelt in Abhängigkeit der managementrelevanten Informationen (I1, I2) eine Betriebsvorgabe (L1) für das erste Energiesubsystem (E1) und kommuniziert sie (L1) an das erste Energiesubsystem (E1) und eine Betriebsvorgabe (L2) für das zweite Energiesubsystem (E2) und kommuniziert sie (L2) an das zweite Energiesubsystem (E2),
wobei die managementrelevante Information (I1) des ersten Energiesubsystems (E1) einen Energie-Spielraum spezifiziert, mittels dem das erste Energiesubsystem (E1) funktionsgerecht betrieben werden kann, und die managementrelevante Information (I2) des zweiten Energiesubsystems (E2) einen Energie-Spielraum spezifiziert, mittels dem das zweite Energiesubsystem (E2) funktionsgerecht betrieben werden kann und die Betriebsvorgabe (L1) an das erste Energiesubsystem (E1) eine sich im übermittelten Energie-Spielraum für das erste Energiesubsystem (E1) bewegende Leistungsvorgabe umfasst und die Betriebsvorgabe (L2) an das zweite Energiesubsystem (E2) eine sich im übermittelten Energie-Spielraum für das zweite Energiesubsystem (E2) bewegende Leistungsvorgabe umfasst.

## Claims

1. Energy management system (1) for a motor vehicle, preferably an energy subsystem-overarching energy management system (1) with a mixed form of centralized energy management and decentralized energy management, having:
- a first autonomous energy subsystem (E1), which requires energy to perform its function and comprises separate energy sub-management means (SM1) and a separate energy storage means,
- at least one second autonomous energy subsystem (E2), which requires energy to perform its function and comprises separate energy sub-management means (SM2) and a separate energy storage means,
- an energy management means (M), which is used for higher level energy management of the first energy subsystem (E1) and of the second energy subsystem (E2),
- wherein the first energy subsystem (E1) is designed to transmit at least one item of management-related Information (I1) to the energy management means (M) and the second energy subsystem (E2) is designed to transmit at least one item of management-related Information (I2) to the energy management means (M) and the energy management means (M) is designed to determine an operational requirement (L1) for the first energy subsystem (E1) depending on the management-related information (I1, I2) and to communicate the same to the first energy subsystem (E1) and to determine an operational requirement (L2) for the second energy subsystem (E2) depending on the management-related information (I1, I2) and to communicate the same to the second energy subsystem (E2),
wherein the management-related information (I1) of the first energy subsystem (E1) specifies an energy margin, by means of which the first energy subsystem (E1) can be operated functionally correctly, and the management-related information (I2) of the second energy subsystem (E2) specifies an energy margin, by means of which the second energy subsystem (E2) can be operated functionally correctly, and the operational requirement (L1) on the first energy subsystem (E1) comprises a power requirement ranging within the transmitted energy margin for the first energy subsystem (E1) and the operational requirement (L2) on the second energy subsystem (E2) comprises a power requirement ranging within the transmitted energy margin for the second energy subsystem (E2).

2. Energy management system (1) according to Claim 1, wherein the management-related information (I1) of the first energy subsystem (E1) comprises a current maximum permissible power consumption of the first energy subsystem (E1), preferably for limiting the associated energy margin, and the management-related information (I2) of the second energy subsystem (E2) comprises a current maximum permissible power consumption of the second energy subsystem (E2), preferably for limiting the associated energy margin.

3. Energy management system (1) according to either one of the preceding claims, wherein the management-related information (I1) of the first energy subsystem (E1) comprises a current minimum permissible power consumption of the first energy subsystem (E1), preferably for limiting the associated energy margin, and the management-related information (I2) of the second energy subsystem (E2) comprises a current minimum permissible power consumption of the second energy subsystem (E2), preferably for limiting the associated energy margin.

4. Energy management system (1) according to any one of the preceding claims, wherein the management-related information (I1) of the first energy subsystem (E1) comprises a current power demand of the first energy subsystem (E1) and the management-related information (I2) of the second energy subsystem (E2) comprises a current power demand of the second energy subsystem (E2).

5. Energy management system (1) according to any one of the preceding claims, wherein the management-related information (I1) of the first energy subsystem (E1) comprises a current total quantity of energy between a minimum permissible and a maximum permissible energy level of the energy storage means of the first energy subsystem (E1), and the management-related information (I2) of the second energy subsystem (E2) comprises a current total quantity of energy between a minimum permissible and a maximum permissible energy level of the energy storage means of the second energy subsystem (E2).

6. Energy management system (1) according to any one of the preceding claims, wherein the management-related information (I1) of the first energy subsystem (E1) comprises a current energy level of the energy storage means of the first energy subsystem (E1), and the management-related information (I2) of the second energy subsystem (E2) comprises a current energy level of the energy storage means of the second energy subsystem (E2).

7. Energy management system (1) according to any one of the preceding claims, wherein the energy management means (M) is designed to determine its power requirement (L1, L2) depending on the efficiency behaviour and/or the efficiency of the first energy subsystem (E1) and on the efficiency behaviour and/or the efficiency of the second energy subsystem (E2).

8. Energy management system (1) according to any one of the preceding claims, wherein the energy management means (M) is designed to determine its operating requirements (L1, L2) depending on current operating data of the motor vehicle.

9. Energy management system (1) according to any one of the preceding claims, wherein the energy management means (M) is designed to determine its operating requirements (L1, L2) depending on forecasted operating data of the motor vehicle.

10. Energy management system (1) according to any one of the preceding claims, wherein the energy management means (M) is designed to determine its operating requirements (L1, L2) depending on operating data at least of a primary drive unit of the motor vehicle.

11. The energy management system (1) according to any one of Claims 8 to 10, wherein the operating data describe the driving situation of the motor vehicle, preferably an external temperature, a route altitude profile and/or a speed of travel of the motor vehicle.

12. Energy management system (1) according to any one of the preceding claims, wherein the energy management means (M) is designed to determine its operating requirements, taking into account the energy subsystems (E1, E2) managed by the energy management means (M) and predefined optimization criteria comprising energy efficiency, minimization of emissions and/or ride comfort, in such a way that subsystem-overarching overall optimization, with regard to a minimized total energy consumption, minimized total emissions and/or increased overall ride comfort, is achieved for the energy subsystems (E1, E2) managed by the energy management means (M).

13. Energy management system (1) according to any one of the preceding claims, wherein the energy subsystems (E1, E2) are designed, based on the operating requirements L1 and L2, generally to operate with minimized energy consumption, minimized emissions and/or maximized ride comfort, and wherein the energy subsystems (E1, E2) are further designed to primarily perform their functions functionally correctly, such that even if they receive no operating requirements or receive conflicting operating requirements (L1, L2) that conflict with functionally correct operation, they still perform their functions properly.

14. Motor vehicle, preferably a commercial vehicle, with an energy management system (1) according to any one of the preceding claims.

15. Method of operation for a motor vehicle energy management system (1) having a first autonomous energy subsystem (E1) that requires energy to perform its function and comprises a separate energy sub-management means (SM1) and a separate energy storage means, at least one second autonomous energy subsystem (E2) that requires energy to perform its function and comprises a separate energy sub-management means (SM2) and a separate energy storage means, and an energy management means (M) that is used for higher level energy management of the first energy subsystem (E1) and of the second energy subsystem (E2), with the following steps:
- the first energy subsystem (E1) transmits at least one item of management-related information (I1) to the energy management means (M),
- the second energy subsystem (E2) transmits at least one item of management-related information (I2) to the energy management means (M),
- depending on the management-related information (I1, I2), the energy management means (M) determines an operational requirement (L1) for the first energy subsystem (E1) and communicates the same (L1) to the first energy subsystem (E1) and determines an operational requirement (L2) for the second energy subsystem (E2) and communicates the same (L2) to the second energy subsystem (E2),
wherein the management-related information (I1) of the first energy subsystem (E1) specifies an energy margin, by means of which the first energy subsystem (E1) can be operated functionally correctly, and the management-related information (I2) of the second energy subsystem (E2) specifies an energy margin, by means of which the second energy subsystem (E2) can be operated functionally correctly, and the operational requirement (L1) on the first energy subsystem (E1) comprises a power requirement ranging within the transmitted energy margin for the first energy subsystem (E1) and the operational requirement (L2) on the second energy subsystem (E2) comprises a power requirement ranging within the transmitted energy margin for the second energy subsystem (E2).

## Revendications

1. Système de gestion d'énergie (1) pour un véhicule automobile, de préférence système de gestion d'énergie (1) couvrant l'ensemble du sous-système d'énergie avec une forme mixte de gestion d'énergie centralisée et de gestions d'énergie décentralisées, comprenant :
- un premier sous-système d'énergie (E1) autonome qui a besoin d'énergie pour remplir sa fonction et possède un sous-gestionnaire d'énergie (SM1) propre et un accumulateur d'énergie propre,
- au moins un deuxième sous-système d'énergie (E2) autonome qui a besoin d'énergie pour remplir sa fonction et possède un sous-gestionnaire d'énergie (SM2) propre et un accumulateur d'énergie propre,
- un gestionnaire d'énergie (M) qui sert à une gestion d'énergie de niveau supérieur du premier sous-système d'énergie (E1) et du deuxième sous-système d'énergie (E2),
- le premier sous-système d'énergie (E1) étant configuré pour communiquer au gestionnaire d'énergie (M) au moins une information relative à la gestion (I1) et le deuxième sous-système d'énergie (E2) étant configuré pour communiquer au gestionnaire d'énergie (M) au moins une information relative à la gestion (I2) et le gestionnaire d'énergie (M) étant configuré pour, en fonction des informations relatives à la gestion (I1, I2), déterminer une consigne opérationnelle (L1) pour le premier sous-système d'énergie (E1) et la communiquer au premier sous-système d'énergie (E1) et déterminer une consigne opérationnelle (L2) pour le deuxième sous-système d'énergie (E2) et la communiquer au deuxième sous-système d'énergie (E2),
l'information relative à la gestion (I1) du premier sous-système d'énergie (E1) spécifiant une marge d'énergie au moyen de laquelle le premier sous-système d'énergie (E1) peut fonctionner conformément à la fonction pour laquelle il est conçu, et l'information relative à la gestion (I2) du deuxième sous-système d'énergie (E2) spécifiant une marge d'énergie au moyen de laquelle le deuxième sous-système d'énergie (E2) peut fonctionner conformément à la fonction pour laquelle il est conçu et la consigne opérationnelle (L1) au premier sous-système d'énergie (E1) comprenant une consigne de puissance se déplaçant dans la marge d'énergie communiquée pour le premier sous-système d'énergie (E1) et la consigne opérationnelle (L2) au deuxième sous-système d'énergie (E2) comprenant une consigne de puissance se déplaçant dans la marge d'énergie communiquée pour le deuxième sous-système d'énergie (E2).

2. Système de gestion d'énergie (1) selon la revendication 1, l'information relative à la gestion (I1) du premier sous-système d'énergie (E1) comprenant une puissance consommée maximale admissible actuelle du premier sous-système d'énergie (E1), de préférence pour délimiter la marge d'énergie associée, et l'information relative à la gestion (I2) du deuxième sous-système d'énergie (E2) comprenant une puissance consommée maximale admissible actuelle du deuxième sous-système d'énergie (E2), de préférence pour délimiter la marge d'énergie associée.

3. Système de gestion d'énergie (1) selon l'une des revendications précédentes, l'information relative à la gestion (I1) du premier sous-système d'énergie (E1) comprenant une puissance consommée minimale admissible actuelle du premier sous-système d'énergie (E1), de préférence pour délimiter la marge d'énergie associée, et l'information relative à la gestion (I2) du deuxième sous-système d'énergie (E2) comprenant une puissance consommée minimale admissible actuelle du deuxième sous-système d'énergie (E2), de préférence pour délimiter la marge d'énergie associée.

4. Système de gestion d'énergie (1) selon l'une des revendications précédentes, l'information relative à la gestion (I1) du premier sous-système d'énergie (E1) comprenant un besoin en puissance actuel du premier sous-système d'énergie (E1) et l'information relative à la gestion (I2) du deuxième sous-système d'énergie (E2) comprenant un besoin en puissance actuel du deuxième sous-système d'énergie (E2).

5. Système de gestion d'énergie (1) selon l'une des revendications précédentes, l'information relative à la gestion (I1) du premier sous-système d'énergie (E1) comprenant une quantité d'énergie totale actuelle entre un état d'énergie minimal admissible et maximal admissible de l'accumulateur d'énergie du premier sous-système d'énergie (E1), et l'information relative à la gestion (I2) du deuxième sous-système d'énergie (E2) comprenant une quantité d'énergie totale actuelle entre un état d'énergie minimal admissible et maximal admissible de l'accumulateur d'énergie du deuxième sous-système d'énergie (E2).

6. Système de gestion d'énergie (1) selon l'une des revendications précédentes, l'information relative à la gestion (I1) du premier sous-système d'énergie (E1) comprenant un état d'énergie actuel de l'accumulateur d'énergie du premier sous-système d'énergie (E1), et l'information relative à la gestion (I2) du deuxième sous-système d'énergie (E2) comprenant un état d'énergie actuel de l'accumulateur d'énergie du deuxième sous-système d'énergie (E2).

7. Système de gestion d'énergie (1) selon l'une des revendications précédentes, le gestionnaire d'énergie (M) étant configuré pour déterminer ses consignes de puissance (L1, L2) en fonction d'un comportement de rendement et/ou d'un taux de rendement du premier sous-système d'énergie (E1) et d'un comportement de rendement et/ou d'un taux de rendement du deuxième sous-système d'énergie (E2).

8. Système de gestion d'énergie (1) selon l'une des revendications précédentes, le gestionnaire d'énergie (M) étant configuré pour déterminer ses consignes opérationnelles (L1, L2) en fonction de données opérationnelles actuelles du véhicule automobile.

9. Système de gestion d'énergie (1) selon l'une des revendications précédentes, le gestionnaire d'énergie (M) étant configuré pour déterminer ses consignes opérationnelles (L1, L2) en fonction de données opérationnelles prévisionnelles du véhicule automobile.

10. Système de gestion d'énergie (1) selon l'une des revendications précédentes, le gestionnaire d'énergie (M) étant configuré pour déterminer ses consignes opérationnelles (L1, L2) en fonction de données opérationnelles d'au moins un groupe propulseur principal du véhicule automobile.

11. Système de gestion d'énergie (1) selon l'une des revendications 8 à 10, les données opérationnelles décrivant la situation de conduite du véhicule automobile, de préférence une température extérieure, un profil de hauteur des parcours et/ou une vitesse de déplacement du véhicule automobile.

12. Système de gestion d'énergie (1) selon l'une des revendications précédentes, le gestionnaire d'énergie (M) étant configuré pour, en tenant compte des sous-systèmes d'énergie (E1, E2) gérés par le gestionnaire d'énergie (M) et de critères d'optimisation prédéfinis, comprenant une efficience énergétique, une minimisation des émissions et/ou un confort de conduite, déterminer ses consignes opérationnelles de telle sorte qu'une optimisation globale couvrant l'ensemble du sous-système est atteinte pour les sous-systèmes d'énergie (E1, E2) gérés par le gestionnaire d'énergie (M), laquelle se rapporte à une consommation d'énergie totale réduite au minimum, des émissions totales réduites au minimum et/ou un confort de conduite global accru.

13. Système de gestion d'énergie (1) selon l'une des revendications précédentes, les sous-systèmes d'énergie (E1, E2) étant configurés pour fonctionner, généralement en se basant sur les consignes opérationnelles L1 et L2, en minimisant la consommation d'énergie, en minimisant les émissions et/ou en maximisant le confort de conduite autant que possible, et les sous-systèmes d'énergie (E1, E2) étant en outre configurés pour remplir en priorité leurs fonctions conformément à la fonction pour laquelle ils sont conçus, de sorte que même lorsqu'ils ne reçoivent aucune consigne opérationnelle (L1, L2) ou lorsqu'ils en reçoivent qui sont en contradiction avec un fonctionnement conforme à la fonction pour laquelle ils sont conçus, ils exécutent tout de même leurs fonctions dans les règles de l'art.

14. Véhicule automobile, de préférence véhicule utilitaire, comprenant un système de gestion d'énergie (1) selon l'une des revendications précédentes.

15. Procédé de fonctionnement pour un système de gestion d'énergie (1) de véhicule automobile, comprenant un premier sous-système d'énergie (E1) autonome qui a besoin d'énergie pour remplir sa fonction et possède un sous-gestionnaire d'énergie (SM1) propre et un accumulateur d'énergie propre, au moins un deuxième sous-système d'énergie (E2) autonome qui a besoin d'énergie pour remplir sa fonction et possède un sous-gestionnaire d'énergie (SM2) propre et un accumulateur d'énergie propre, et un gestionnaire d'énergie (M) qui sert à une gestion d'énergie de niveau supérieur du premier sous-système d'énergie (E1) et du deuxième sous-système d'énergie (E2), comprenant les étapes suivantes :
- le premier sous-système d'énergie (E1) communique au gestionnaire d'énergie (M) au moins une information relative à la gestion (I1),
- le deuxième sous-système d'énergie (E2) communique au gestionnaire d'énergie (M) au moins une information relative à la gestion (I2),
- le gestionnaire d'énergie (M) détermine, en fonction des informations relatives à la gestion (I1, I2), une consigne opérationnelle (L1) pour le premier sous-système d'énergie (E1) et la (L1) communique au premier sous-système d'énergie (E1) et une consigne opérationnelle (L2) pour le deuxième sous-système d'énergie (E2) et la (L2) communique au deuxième sous-système d'énergie (E2),
l'information relative à la gestion (I1) du premier sous-système d'énergie (E1) spécifiant une marge d'énergie au moyen de laquelle le premier sous-système d'énergie (E1) peut fonctionner conformément à la fonction pour laquelle il est conçu, et l'information relative à la gestion (I2) du deuxième sous-système d'énergie (E2) spécifiant une marge d'énergie au moyen de laquelle le deuxième sous-système d'énergie (E2) peut fonctionner conformément à la fonction pour laquelle il est conçu et la consigne opérationnelle (L1) au premier sous-système d'énergie (E1) comprenant une consigne de puissance se déplaçant dans la marge d'énergie communiquée pour le premier sous-système d'énergie (E1) et la consigne opérationnelle (L2) au deuxième sous-système d'énergie (E2) comprenant une consigne de puissance se déplaçant dans la marge d'énergie communiquée pour le deuxième sous-système d'énergie (E2).
